# EUROPÄISCHE PATENTANMELDUNG

(11) **EP 3 098 593 A1**
(43) Veröffentlichungstag der Anmeldung: **30.11.2016**
(21) Anmeldenummer: 16171030.6
(22) Anmeldetag: 24.05.2016
(51) Int. Cl.: G01N 22/00, G01N 22/04

(54) **VORRICHTUNG UND VERFAHREN ZUR ENTFERNUNGSAUFGELÖSTEN BESTIMMUNG EINES PHYSIKALISCHEN PARAMETERS IN EINER MESSUMGEBUNG**

(30) Priorität: 26.05.2015 DE 102015209578
(71) Anmelder: Fraunhofer-Gesellschaft zur Förderung der angewandten Forschung e.V., 80686 München (DE)
(72) Erfinder: Herrmann, Hans-Georg, 66132 Saarbrücken (DE); Sklarczyk, Christoph, 66538 Neunkirchen (DE); Moryson, Ralf, 66787 Differten (DE); Maisl, Michael, 66629 Freisen-Reitscheid (DE); Herrmann de Valliere, Esther, 66132 Saarbrücken (DE)
(74) Vertreter: Rösler, Uwe

(57) **Zusammenfassung**

Beschrieben wird eine Vorrichtung sowie ein Verfahren zur entfernungsaufgelösten Bestimmung eines physikalischen Parameters in einer Messumgebung unter Nutzung einer zerstörungsfreien Prüftechnik mit wenigstens einem Mikrowellen-Sensor-Paar, das einen ersten und zweiten Mikrowellen-Sensor umfasst, die in einem ersten vorgegebenen Abstand zueinander längs einer gemeinsamen Messebene angeordnet sind und jeweils eine Sende- und Empfangsapertur aufweisen, die innerhalb eines der Messumgebung zugewandten Halbraumes überlappen, einem ortsauflösenden optischen Sensor mit einer zumindest teilweise den Bereich der überlappenden Sende- und Empfangsaperturen des wenigstens einen Mikrowellen-Sensor-Paars erfassenden Sensorapertur, einer Datenerfassungseinheit, die in einer Datenverbindung mit dem wenigstens einen Mikrowellen-Sensor-Paar sowie dem ortsauflösenden optischen Sensor steht, in der Mikrowellen-Sensor-Daten sowie optische Sensordaten erfassbar sind sowie einer Auswerteinheit, in der die erfassten Mikrowellen-Sensor-Daten auf der Grundlage der optischen Sensordaten zur entfernungsaufgelösten Bestimmung des physikalischen Parameters auswertbar sind.

## Beschreibung

### Technisches Gebiet

Die Erfindung bezieht sich auf eine Vorrichtung sowie ein Verfahren zur entfernungsaufgelösten Bestimmung eines physikalischen Parameters in einer Messumgebung unter Nutzung einer zerstörungsfreien Prüftechnik.

### Stand der Technik

Zerstörungsfreie Messmethoden, mit denen die Erfassung physikalischer Parameter tiefen- bzw. entfernungsaufgelöst möglich sind, sind hinlänglich bekannt und erfordern zumeist eine speziell an die jeweilige Prüfsituation und -aufgabe angepasste Gerätetechnik, insbesondere spezielle Sensoren, die in geeigneten Messgestellen bzw. Prüfköpfen untergebracht sind. Darüber hinaus bedarf es komplexer Signalauswerteeinheiten, die bereits aufgrund ihrer Wertigkeit kostenintensiv und somit einen breiten Anwendungsbereich außerhalb von Laborumgebungen nicht ohne weiteres ermöglichen. Demgegenüber besteht der Bedarf zerstörungsfreie Prüfmethoden an beliebigen Orten und Umgebungen, insbesondere in der Natur an natürlichen Objekten einzusetzen.

Durch die Verbreitung und alltägliche Nutzung portabler Recheneinheiten in Form von Notebooks, Tablet-Computer und Smartphones eröffnen sich für die vorstehend erläuterten zerstörungsfreien Prüfmethoden neue vielfältige Anwendungsmöglichkeiten. So verfügen moderne Smartphones zumeist über eine Vielzahl unterschiedlicher Sensorsysteme, die bei geeigneter Aktivierung und synergetischer Abstimmung aufeinander die Durchführung und Auswertung von einfachen zerstörungsfreien Prüfverfahren ermöglichen. So verfügen derartige Smartphones über Sensoren wie Magnetometer, Farb-Kamera, Mikrophon, Beschleunigungssensor, GPS-Empfänger, Lautsprecher, LED-Lichtquelle, Vibrationsgenerator, um nur einige zu nennen. Gleichfalls enthalten Smartphones über eine ausreichende Speicher- und Rechenkapazität, mit der Messsignale in geeigneter Form ausgewertet sowie über das ebenfalls vorhandene Display ergebnisorientiert optisch dargestellt werden können.

Zur funktionalen Erweiterung derartiger portabler Rechen- und Kommunikationsgeräte existiert bereits eine Vielzahl technischer Zusatzmodule, die über eine geeignete mechanische Schnittstelle verfügen und bspw. mit dem Smartphone eine Baueinheit bilden oder die zumindest in kabelgebundener oder kabelloser Datenkommunikation mit der entsprechend portablen Recheneinheit stehen und somit ein intermodular kommunizierendes, funktionales Mess-System darstellen. Beispiele hierzu betreffen beispielsweise ein Thermographie-Zusatzmodul als Aufsatz für ein Smartphone, wodurch das Smartphone zur Infrarotbildaufnahme befähigt wird. Auch sind Module erhältlich, die auf Basis von Leitfähigkeitsmessungen die Wasserversorgung von Pflanzen überwachen. Derartige Zusatzmodule sind beispielsweise über den Lautsprecherausgang bzw. Mikrofoneingang des Smartphones ankoppelbar.

In Zusammenhang mit der rasanten Fortentwicklung und Innovationsfreudigkeit von Technikmodulen, die in Verbindung mit portablen Kommunikationsgeräten die Funktionalität derartiger moderner Kommunikationsgeräte signifikant erweitern, besteht nach wie vor der Anspruch an möglichst hochauflösende und präzise arbeitende Messverfahren zur Bestimmung physikalischer Parameter, wie sie zumeist nur mit hoch komplexen und kostspieligen Labormessgeräten gewonnen werden können.

### Darstellung der Erfindung

Der Erfinder legt die Aufgabe zugrunde, eine Vorrichtung sowie ein Verfahren zur entfernungsaufgelösten Bestimmung eines physikalischen Parameters in einer Messumgebung unter Nutzung einer zerstörungsfreien Prüftechnik derart weiterzubilden, so dass bei Nutzung eines modernen portablen Kommunikationsgerätes als Teil der für die Messdatengewinnung und/oder -auswertung und/oder Messdatendarstellung erforderlichen Vorrichtung die Messqualität sowie auch die Messgenauigkeit in etwa jener entspricht, die mit Hilfe hochwertiger Laboranalysegeräte erzielbar sind.

Die der Erfindung zugrundeliegende Aufgabe ist im Anspruch 1 angegeben. Gegenstand des Anspruches 12 ist ein Verfahren zur entfernungsaufgelösten Bestimmung eines physikalischen Parameters. Den Erfindungsgedanken in vorteilhafterweise weiterbildende Merkmale sind Gegenstand der Unteransprüche sowie der weiteren Beschreibung unter Bezugnahme auf die illustrierten Ausführungsbeispiele zu entnehmen.

Die lösungsgemäße Vorrichtung zur entfernungsaufgelösten Bestimmung eines physikalischen Parameters in einer Messumgebung unter Nutzung einer zerstörungsfreien Prüftechnik umfasst wenigstens ein Mikrowellensensorpaar, das einen ersten und zweiten Mikrowellen-Sensor umfasst, die in einem ersten vorgegebenen Abstand zueinander längs einer gemeinsamen Messebene angeordnet sind und jeweils eine Sende- und Empfangsapertur aufweisen, die innerhalb eines der Messumgebung zugewandten Halbraumes überlappen. Ferner ist ein ortsauflösender optischer Sensor mit einer zumindest teilweise den Bereich der überlappenden Sende- und Empfangsaperturen des wenigstens einen Mikrowellen-Sensor-Paars erfassenden Sensorapertur vorgesehen. Mit Hilfe des ortsauflösenden optischen Sensors kann die Messumgebung und insbesondere können innerhalb der Messumgebung vorhandene Objekte und Konturen entfernungsaufgelöst relativ zur Messebene, in der sich in vorteilhafter Weise der ortsauflösende optische Sensor befindet, ermittelt werden.

Die mit Hilfe des optischen Mikrowellen-Sensorpaars gewonnenen Mikrowellen-Sensor-Daten sowie auch die mit Hilfe des ortsauflösenden optischen Sensors gewonnenen optischen Sensordaten werden mit einer Datenerfassungseinheit, die in Datenverbindung sowohl mit dem wenigstens einen Mikrowellen-Sensorpaar als auch mit dem optischen Sensor steht, erfasst. Auf der Grundlage der optischen Sensordaten werden die erfassten Mikrowellen-Sensordaten zur entfernungsaufgelösten Bestimmung des physikalischen Parameters innerhalb einer prozessorgestützten Auswerteeinheit ausgewertet.

In einer bevorzugten Ausführungsform befindet sich das wenigstens eine Mikrowellen-Sensorpaar in einem Zusatzmodul, das über eine geeignete mechanische sowie auch datentechnische Schnittstelle mit einer rechnergestützten portablen Einheit, vorzugsweise in Form eines modernes Kommunikationsmittels, bspw. Smartphone oder Tablet-Computer, verbindbar ist. Das Zusatzmodul bildet mit der portablen Einheit eine einheitlich handhabbare Baueinheit, in der das wenigstens eine Mikrowellen-Sensorpaar und eine Kameraeinheit, die als integrale Komponente in der portablen Einheit vorgesehen ist, in einem festen räumlichen Bezug zueinander stehen. Die üblicherweise in Smartphones oder Tablet-PCs enthaltenen Kameraeinheiten weisen zumeist CCD-Chip basierte, lichtempfindliche Sensoren auf, die unter Nutzung einer geeigneten softwaregestützten Bildaufbereitung eine entfernungsaufgelöste Bildauswertung gestatten.
Zur entfernungsaufgelösten Bilddatengewinnung sieht eine weitere Ausführungsvariante die Nutzung der optischen Abbildungseigenschaften einer vorstehenden Kameraeinheit vor, deren Fokuseinstellung sukzessive veränderbar ist. So lassen sich über die Variation der sich jeweils scharf abbildenden Abstandsebenen zum Abbildungsobjektiv der Kameraeinheit
Entfernungsinformationen generieren, die umso genauer sind, je kleiner die der Abbildungsoptik zuordenbare Tiefenschärfe ist. Wird beispielsweise die Schärfeeinstellung der Abbildungsoptik von "nah" bis "unendlich" verändert, so entfernt sich entfernungsaufgelöst die sich jeweils scharf abbildende Abbildungsebene von der Abbildungsoptik. Im umgekehrten Fall nähert sie sich der Abbildungsoptik an. Auf diese Weise lassen sich entfernungsaufgelöste "Schnittbilder" von der Umgebung erstellen.

Sollte die Kameraeinheit darüber hinaus über ein variabel einstellbares Blendensystem verfügen, so kann bspw. durch Blendenvariation der Tiefenschärfebereich der Kameraabbildungsoptik gezielt verändert werden, wodurch sich weitere nutzbare Entfernungsinformationen aus dem Abstand zwischen der Abbildungsoptik und der jeweils sich scharf abbildenden Abbildungsebene bzw. dem sich scharf abbildenden Abbildungsbereich ergeben.

Alternativ oder in Kombination mit der vorstehenden Entfernungsauflösung lässt sich zudem ein Autofokussystem nutzen, das bspw. einen IR-Abstandssensor umfasst. Mit Hilfe des Autofokussystems lassen sich Entfernungsinformationen hinsichtlich des Abstandes zu der sich jeweils scharf abbildenden Abbildungsebene erfassen.

Denkbar ist auch der Einsatz einer strukturierten Lichtquelle, die in dem Zusatzmodul integriert ist und so eine entfernungsaufgelöste optische Messung mit Hilfe der in einem Smartphone integrierten Kamera ermöglicht oder zumindest unterstützt.

Die mit Hilfe der als ortsauflösender optischer Sensor dienenden Kameraeinheit der portablen Einheit gewonnenen optischen Sensordaten sowie die erfassten Mikrowellen-Sensordaten werden zur entfernungsaufgelösten Bestimmung eines physikalischen Parameters unter Nutzung der ebenfalls in der portablen Einheit enthaltenen Prozessor- gestützten Recheneinheit, die zudem über ausreichende Speicherkapazitäten verfügt, erfasst und ausgewertet. Auf dem Display der portablen Einheit werden die Messergebisse graphisch dargestellt und/oder können sofort über drahtlose Kommunikation zur weiteren Nutzung übertragen werden.

Alternativ sieht eine weitere Ausführungsvariante die Integration des wenigstens einen Mikrowellen-Sensor-Paares sowie des ortsauflösenden optischen Sensors sowie auch die Datenerfassungseinheit innerhalb eines Modulgehäuses vor, das über eine Schnittstelle mit einer portablen Einheit, bspw. Smartphone verbindbar ist, in der zumindest die Prozessoreinheit zu Zwecken der Datenauswertung verwendet werden kann. Selbstverständlich sind auch weitere Kombinationsmöglichkeiten denkbar, durch die die Funktionalität eines modernen portablen rechnergestützten Kommunikationsmittels in der lösungsgemäßen Weise erweitert werden kann.

Zu Zwecken der entfernungsaufgelösten Bestimmung eines physikalischen Parameters innerhalb einer Messumgebung sind der erste und zweite Mikrowellen-Sensor derart angeordnet und ausgebildet, dass die von beiden Mikrowellen-Sensoren abgestrahlten Mikrowellenfelder einen ersten Fokusbereich bzw. Fokuspunkt bilden, der in Abhängigkeit des gegenseitigen Abstandes beider Mikrowellensensoren längs der Messebene in einem definierten ersten Messabstand zur Messebene innerhalb der Messumgebung liegt. Beide Mikrowellensensoren verfügen zum Aussenden und Empfangen von Mikrowellen über wenigstens eine Mikrowellen-Antenne, die jeweils über eine Strahlungscharakteristik verfügt. Die Strahlungscharakteristik legt unter anderem auch die Sende- und Empfangsapertur einer Mikrowellenantenne fest. Zur Ausbildung eines Fokusbereiches zweier nebeneinander angeordneten Mikrowellensensoren gilt es die Sende- bzw. Empfangskeulen der Mikrowellensensoren räumlich derart in Überlappung zu bringen, so dass vorzugsweise ihre Hauptkeulenbereiche maximal überlappen. Dieser Raumbereich bildet den sogenannten Fokusbereich, der in einem definierten Abstand zur Messebene lieg. Somit ist es möglich, Mikrowellensignale aus einem definiert vorgegebenen Raumbereich relativ zur Mikrowellensensor-Anordnung zu empfangen. Zugleich liefert der ortsauflösende optische Sensor entfernungsaufgelöste Bilddaten von der Messumgebung, die bei der Auswertung der Mikrowellendaten zugrunde gelegt werden.

Mikrowellen mit Frequenzen von einigen wenigen MHz bis einigen GHz vermögen vorzugsweise mit Wasser in Wechselwirkung zu treten, so dass als ein besonders bevorzugt zu erfassender physikalischer Messparameter Wasser oder allgemein Feuchtigkeit in Frage kommt. Zur ortsaufgelösten Feuchtebestimmung in der Messumgebung, sei es in bestimmten Objekten oder im Erdreich bzw. Boden, werden die aus dem Fokusbereich beider Mikrowellensensoren gewonnenen Mikrowellendaten mittels eines auf mathematischer Inversion beruhenden Auswerte-Algorithmus ausgewertet, wodurch eine erhebliche bessere Auflösung bzw.

Genauigkeit der Feuchtigkeitswerte innerhalb des messtechnisch erfassten Fokusbereiches erzielt werden können. Insbesondere lässt sich im Wege der zusätzlichen optischen Bilderfassung der Messumgebung der räumliche Bezug zwischen dem messtechnisch erfassten Fokusbereich und der Messumgebung, beispielsweise relativ zu einem zu untersuchenden Messobjekt bestimmen.

In einem weiteren bevorzugten Ausführungsbeispiel sind wenigstens der erste und/oder der zweite Mikrowellen-Sensor längs der Messebene beweglich angeordnet und ausgebildet, so dass der Abstand zwischen dem ersten und zweiten Mikrowellen-Sensor längs der Messebene variabel einstellbar ist. Auf diese Weise lässt sich der Messabstand zwischen der Messebene und dem ersten Fokusbereich variabel einstellen. Wird beispielsweise der gegenseitige Abstand zwischen beiden Mikrowellensensoren vergrößert, so rückt der Fokusbereich, in den beide Mikrowellenfelder maximal überlappen, von der Messebene weiter weg. Wird hingegen der Abstand zwischen beiden Mikrowellensensoren verkleinert, so nähert sich der Fokusbereich der Messebene an. Durch geeignete Variation des gegenseitigen Sensorabstandes längs der Messebene kann bei ansonsten gleichbleibender Positionierung der Messvorrichtung relativ zur Messumgebung ein messtechnisches Tiefenprofil von einem innerhalb der Messumgebung befindlichen Messobjekt erstellt werden. Zudem ist es möglich auf der Grundlage der mit Hilfe des ortsauflösenden optischen Sensors gewonnenen Bildinformationen den Messabstand des Fokusbereiches zur Messebene durch geeignete Abstandsvariation beider Mikrowellensensoren in gewünschter Weise einzustellen. Hierzu dient u.a. eine Steuereinheit, die im Signalaustausch mit den wenigstens einem Mikrowellen-Sensor-Paar sowie dem ortsauflösenden optischen Sensor steht.

Eine weitere Ausführungsform sieht zur Vermeidung einer beweglichen Lagerung der wenigstens zwei Mikrowellensensoren wenigstens ein zweites Mikrowellen-Sensor-Paar vor, das vorzugsweise symmetrisch zum ersten Mikrowellen-Sensor-Paar angeordnet ist und einen gegenüber dem ersten Mikrowellen-Sensor-Paar unterschiedlichen gegenseitigen Abstand längs zur Messebene aufweist, wodurch ein dem zweiten Mikrowellen-Sensor-Paar zuordenbarer Fokusbereich einen Abstand zur Messebene aufweist, der sich vom Abstand des dem ersten Mikrowellen-Sensor-Paars zugeordneten Fokusbereich unterscheidet. Selbstverständlich können auch mehr als zwei derartige Mikrowellen-Sensor-Paare längs der Messebene angeordnet werden, um jeweils unterschiedlich weit zur Messebene entfernte Fokusbereiche abzudecken. Mit Hilfe einer derartigen Vielfach-Mikrowellen-Sensor-Paaranordnung längs der Messebene können innerhalb der Messumgebung physikalische Parameterwerte, vorzugsweise Feuchtigkeitswerte aus unterschiedlichen Entfernungen zur gemeinsamen Messebene ermittelt werden.

Die mit Hilfe des optischen ortsauflösenden Sensors gewonnenen Bildinformationen liegen in Abhängigkeit der spektralen Empfindlichkeit des Sensors vorzugsweise im sichtbaren Wellenlängenbereich. In bestimmten Anwendungsfällen kann es vorteilhaft sein, die optische Empfindlichkeit des optischen Sensors in den infraroten Spektralbereich zu erweitern bzw. zu verlagern.

Gilt es neben einem konkret vorgegebenen physikalischen Parameter, wie beispielsweise die Feuchtigkeit, weitere physikalische Parameter messtechnisch zu erfassen, so kann die lösungsgemäße Vorrichtung mit beliebig weiteren Sensoren bestückt werden, deren zuordenbare Sensorsignale innerhalb der Auswerteeinheit in geeigneter Weise ausgewertet werden können. Beispielsweise bieten sich hierfür akustische Sensoren an, vorzugsweise in Form von Ultraschallsensoren, Lautsprecher, Mikrofon, oder Beschleunigungssensoren. Auch ist es möglich, zu Zwecken der Auswertung elektromagnetischer Wellen Spektralanalysesensoren vorzusehen. Eine derartige Spektralanalyse kann beispielsweise mit Hilfe eines geeigneten optisch wirksamen Vorsatzelementes, das vor die Kameralinse einer Smartphone-Kamera gesetzt werden kann. Ein optisch wirksames Vorsatzelement ist beispielsweise ein optisches Gitter oder ein Prisma.

Mit Hilfe der lösungsgemäßen Vorrichtung lässt sich ein Verfahren zur entfernungsaufgelösten Bestimmung eines physikalischen Parameters, beispielsweise Feuchtigkeit in einer Messumgebung, beispielsweise im Boden, unter Nutzung einer zerstörungsfreien Prüftechnik in der folgenden Weise durchführen.

Zunächst wird mit Hilfe eines ortsauflösenden optischen Sensors die Messumgebung orts- bzw. entfernungsaufgelöst erfasst, um ortsaufgelöste Bildinformationen von der Messumgebung zu erhalten. Im Weiteren werden wenigstens zwei sich im Bereich der Messumgebung überlagernde Mikrowellenfelder generiert, die einen Fokusbereich innerhalb der Messumgebung bilden. Aus dem Fokusbereich werden Mikrowellensignale empfangen, die auf der Grundlage der ortsaufgelösten Bildinformationen ausgewertet werden. Die Auswertung der Mikrowellensignale erfolgt zum einen auf der Grundlage eines mathematisch invertierenden Algorithmus, vorzugsweise auf Basis der Common-Mid-Point-Methode, zum anderen unter Berücksichtigung der A-priori-Information des optischen Sensors, der ortsauflösende Bildinformationen von der Messumgebung bereitstellt. Auf diese Weise kann eine deutlich bessere Auflösung des Zielwertes, beispielsweise des Feuchtigkeitswertes, innerhalb des Fokusbereiches erhalten werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Messanordnung mit jeweils zwei fest angeordneten Mikrowellensensor-Paaren sowie
- Fig. 2: Messanordnung mit einem beweglich angeordneten Mikrowellensensorpaar

### Wege zur Ausführung der Erfindung, gewerbliche Verwendbarkeit

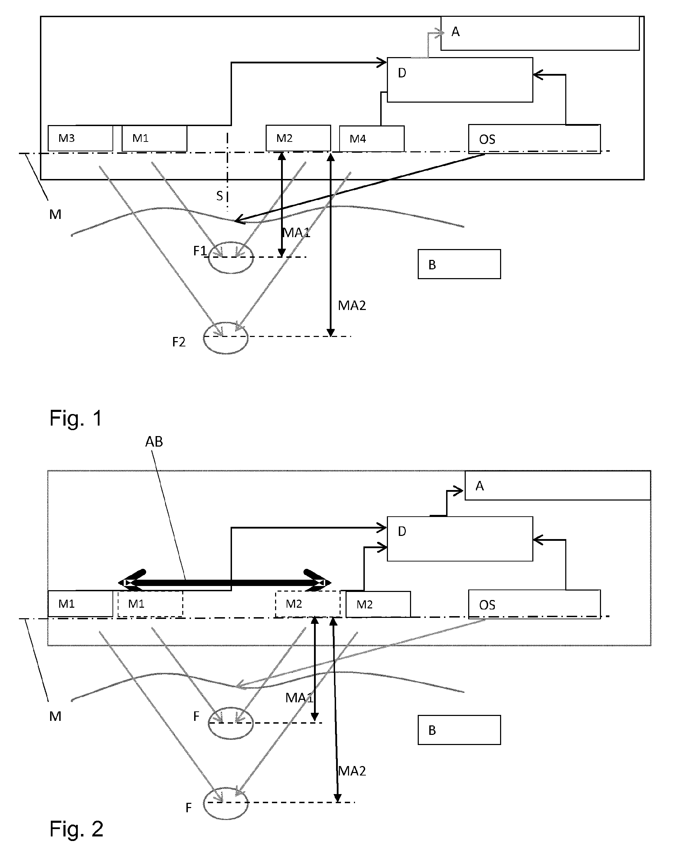

Figur 1 zeigt schematisiert eine Vorrichtung zur ortsaufgelösten Bestimmung eines physikalischen Parameters, vorzugsweise von Feuchtigkeit in einer Messumgebung, die den Boden B darstellen soll. Die Vorrichtung umfasst ein erstes Mikrowellen-Sensor-Paar, bestehend aus einem ersten und einem zweiten Mikrowellensensor M1, M2 sowie einem zweiten Mikrowellen-Sensor-Paar, bestehend aus einem dritten und einem vierten Mikrowellensensor M3, M4. Beide Mikrowellensensorpaare sind längs einer gemeinsamen Messebene M angeordnet und zudem symmetrisch zu einer die Messebene schneidenden Symmetrieachse S. Die Mikrowellen-Sensoren M1 und M2 bzw. die Mikrowellen-Sensoren M3, M4 sind derart relativ zueinander ausgerichtet, so dass die den Mikrowellen-Sensoren zugeordneten Antennenhauptkeulen im Fokusbereich F1 bzw. F2 jeweils maximal überlappen. Die beiden Mikrowellen-Sensor-Paaren M1, M2 sowie M3, M4 zuordenbaren Fokusbereiche F1, F2 weisen jeweils unterschiedliche Messabstände MA1, MA2 relativ zur Messebene M auf. Auf diese Weise ist es möglich aus zwei unterschiedlichen Tiefenbereichen Mikrowellendaten zu erhalten, die in geeigneter Weise zur Feuchtigkeitsbestimmung herangezogen werden können.

Die von Seiten der Mikrowellensensoren M1 bis M4 generierbaren Mikrowellensignale werden einer Datenerfassungseinheit D zugeführt, der zugleich auch optische Bilddaten zugeführt werden, die mit einem ortsauflösenden, optischen Sensor OS gewonnen werden. Der optische Sensor OS ist in einer festen räumlich definierten Zuordnung relativ zu den Mikrowellensensoren M1 bis M4 angeordnet und vermag die Messumgebung B optisch ortsaufgelöst zu erfassen. Vorzugsweise ist der optische Sensor OS ebenfalls in der Messebene M angeordnet. Die von Seiten des optischen Sensors OS herrührenden optisch aufgelösten Sensordaten werden in der Datenerfassungseinheit D mit den Mikrowellendaten fusioniert und einer prozessorgestützten Auswerteeinheit A zugeführt, in der die erfassten Mikrowellen-Sensordaten auf der Grundlage der optischen Sensordaten zur entfernungsaufgelösten Bestimmung des physikalischen Parameters, vorzugsweise von Feuchtigkeit, ausgewertet werden.

In einer in Figur 2 illustrierten zweiten Ausführungsform ist lediglich ein Mikrowellensensorpaar, bestehend aus einem ersten und zweiten Mikrowellensensor M1, M2 vorgesehen, wobei der Abstand AB zwischen beiden Mikrowellensensoren M1, M2 variiert werden kann. Hierdurch lassen sich die Abstände MA1, MA2 des Fokusbereiches F durch entsprechende Abstandsvariation AB zwischen den Mikrowellensensoren ebenfalls variieren.

In gleicher Weise wie beim Ausführungsbeispiel gem. Fig. 1 werden die von Seiten der Mikrowellensensoren M1, M2 erfassten Mikrowellendaten sowie auch die optischen Signaldaten von Seiten des optischen Sensors OS der Datenerfassungseinheit D zugeführt, in der eine Datenfusion erfolgt. In der Auswerteeinheit werden sodann die erfassten Mikrowellen-Sensordaten auf der Grundlage der optischen Sensordaten zur entfernungsaufgelösten Bestimmung des physikalischen Parameters, vorzugsweise von Feuchtigkeit, ausgewertet.

Vorzugsweise ist zumindest das wenigstens eine Mikrowellen-Sensor-Paar M1, M2 in einem Modulgehäuse integriert, das über eine kabelgestützte oder kabellose Schnittstelle mit einer Rechnereinheit, bspw. in Form eines Smartphones verbindbar ist, in der der ortsauflösende optische Sensor OS in Form einer Kamera, die Datenerfassungseinheit sowie die Auswerteinheit enthalten sind.
Alternativ ist es möglich neben den Mikrowellen-Sensoren auch die Datenerfassungseinheit sowie den ortsauflösenden optischen Sensor in das Modulgehäuse zu integrieren, insbesondere in Fällen, in denen zu Zwecken der Prüfung ein speziell konfektionierter optischer Sensor sowie eine entsprechende Datenerfassung erforderlich sind, die in dieser Form nicht in üblichen Smartphones etc. verbaut sind. Die Auswertung der Daten sowie die graphische Darstellung können wiederum mit Komponenten des Smartphones erfolgen. Auch sind weitere Komponentenaufteilungen zwischen dem, das wenigstens eine Mikrowellen-Sensor-Paar enthaltene Modulgehäuse und der portablen Einheit (bspw. Smartphone, Notebook, Tablet-PC etc.) denkbar.

### Bezugszeichenliste

- M: Messebene
- M1,2: Mikrowellen-Sensor
- M3,4: Mikrowellen-Sensor
- MA1,: Messabstand
- MA2: Messabstand
- A: Auswerteinheit
- D: Datenerfassungseinheit
- OS: Optischer Sensor
- F1,: Fokusbereich
- F2: Fokusbereich
- S: Symmetrieebene
- B: Boden

## Patentansprüche

1. Vorrichtung zur entfernungsaufgelösten Bestimmung eines physikalischen Parameters in einer Messumgebung unter Nutzung einer zerstörungsfreien Prüftechnik mit
- wenigstens einem Mikrowellen-Sensor-Paar, das einen ersten und zweiten Mikrowellen-Sensor umfasst, die in einem ersten vorgegebenen Abstand zueinander längs einer gemeinsamen Messebene angeordnet sind und jeweils eine Sende- und Empfangsapertur aufweisen, die innerhalb eines der Messumgebung zugewandten Halbraumes überlappen,
- einem ortsauflösenden optischen Sensor mit einer zumindest teilweise den Bereich der überlappenden Sende- und Empfangsaperturen des wenigstens einen Mikrowellen-Sensor-Paars erfassenden Sensorapertur,
- einer Datenerfassungseinheit, die in einer Datenverbindung mit dem wenigstens einen Mikrowellen-Sensor-Paar sowie dem ortsauflösenden optischen Sensor steht, in der Mikrowellen-Sensor-Daten sowie optische Sensordaten erfassbar sind sowie
- einer Auswerteinheit, in der die erfassten Mikrowellen-Sensor-Daten auf der Grundlage der optischen Sensordaten zur entfernungsaufgelösten Bestimmung des physikalischen Parameters auswertbar sind.

2. Vorrichtung nach Anspruch 1,
**dadurch gekennzeichnet, dass** der erste und zweite Mikrowellen-Sensor derart angeordnet und ausgebildet sind, dass die von beiden Mikrowellen-Sensoren abgestrahlten Mikrowellenfelder einen ersten Fokusbereich bilden, der in Abhängigkeit vom ersten Abstand in einem ersten Messabstand zur Messebene innerhalb der Messumgebung liegt.

3. Vorrichtung nach Anspruch 1 oder 2,
**dadurch gekennzeichnet, dass** eine Steuereinheit vorgesehen ist, die in Signalaustausch mit dem wenigstens einen Mikrowellen-Sensor-Paar sowie dem ortsauflösenden optischen Sensor steht.

4. Vorrichtung nach einem der Ansprüche 1 bis 3,
**dadurch gekennzeichnet, dass** wenigstens ein zweites Mikrowellen-Sensor-Paar vorgesehen ist, das einen dritten und vierten Mikrowellen-Sensor umfasst, die in einem zweiten vorgegebenen Abstand zueinander längs der gemeinsamen Messebene angeordnet sind und jeweils eine zumindest teilweise innerhalb der Messebene, gegenseitig überlappende Sende- und Empfangsapertur aufweisen, und dass die von dem dritten und vierten Mikrowellen-Sensor abgestrahlten Mikrowellenfelder einen Fokusbereich bilden, der in Abhängigkeit vom zweiten Abstand in einem Messabstand zur Messebene innerhalb der Messumgebung liegt, der sich vom ersten Abstand unterscheidet.

5. Vorrichtung nach einem der Ansprüche 1 bis 3,
**dadurch gekennzeichnet, dass** wenigstens der erste und/oder zweite Mikrowellen-Sensor längs der Messebene beweglich derart angeordnet und ausgebildet sind, so dass der erste Abstand zwischen dem ersten und zweiten Mikrowellen-Sensor variabel einstellbar ist und somit auch der Messabstand zwischen der Messebene und dem ersten Fokusbereich variabel einstellbar ist.

6. Vorrichtung nach einem der Ansprüche 3 bis 5,
**dadurch gekennzeichnet, dass** die Steuereinheit das wenigstens eine Mikrowellen-Sensor-Paar zur Durchführung einer Mikrowellenmessung aktiviert und dass die Steuereinheit den ortsauflösenden optischen Sensor zeitlich vor und/oder während der Mikrowellenmessung aktiviert.

7. Vorrichtung nach einem der Ansprüche 1 bis 6,
**dadurch gekennzeichnet, dass** der ortsauflösende optische Sensor zumindest eine Sensor-Empfindlichkeit im sichtbaren Wellenlängenspektrum, vorzugsweise auch oder im IR-Wellenlängenbereich besitzt.

8. Vorrichtung nach einem der Ansprüche 1 bis 7,
**dadurch gekennzeichnet, dass** das wenigstens eine Mikrowellen-Sensor-Paar zur entfernungsaufgelösten Bestimmung von Feuchtigkeit in der Messumgebung als physikalischer Parameter geeignet ausgewählt ist.

9. Vorrichtung nach einem der Ansprüche 1 bis 8,
**dadurch gekennzeichnet, dass** zumindest das wenigstens eine Mikrowellen-Sensor-Paar in einem Modulgehäuse integriert ist, das über eine kabelgestützte oder kabellose Schnittstelle mit einer Rechnereinheit verbindbar ist, in der der ortsauflösende optische Sensor, die Datenerfassungseinheit sowie die Auswerteinheit enthalten sind oder in der die Auswerteeinheit enthalten ist und der ortsauflösende optische Sensor enthalten sind sowie die Datenerfassungseinheit in dem Modulgehäuse integriert ist oder in der die Auswerteeinheit und der ortsauflösende optische Sensor enthalten sind und die Datenerfassungseinheit in dem Modulgehäuse integriert ist.

10. Vorrichtung nach Anspruch 9,
**dadurch gekennzeichnet, dass** die Rechnereinheit ein PC, ein Smartphone oder eine Tablet-Computer ist.

11. Vorrichtung nach einem der Ansprüche 1 bis 10,
**dadurch gekennzeichnet, dass** der ortsauflösende optische Sensor eine Abbildungsoptik mit variablen, entfernungsaufgelösten Schärfeneinstellung und/ oder variierbarer Tiefenschärfe besitzt, und/oder,
dass der ortsauflösende Sensor eine Abbildungsoptik mit einem Autofokussystem umfasst.

12. Verfahren zur entfernungsaufgelösten Bestimmung eines physikalischen Parameters, vorzugsweise Feuchtigkeit, in einer Messumgebung unter Nutzung einer zerstörungsfreien Prüftechnik **gekennzeichnet durch** folgende Verfahrensschritte:
- Entfernungsaufgelöstes Erfassen der Messumgebung mit wenigstens einem ortsauflösenden optischen Sensor zur Erzeugung von ortsaufgelösten Bildinformationen von der Messumgebung,
- Generieren wenigstens zweier im Bereich der Messumgebung überlagernder Mikrowellenfelder, die einen Fokusbereich in der Messumgebung bilden zur Erzeugung von detektierbaren Mikrowellensignale aus dem Fokusbereich sowie
- Auswerten der Mikrowellensignale auf der Grundlage der ortsaufgelösten Bildinformationen.

13. Verfahren nach Anspruch 12,
**dadurch gekennzeichnet, dass** bei der Auswertung ein Algorithmus zur mathematischen Inversion eingesetzt wird, bei der aus den Mikrowellensignalen Zielwerte in Form von Bildinformationen gewonnen werden, die unter Zugrundelegung der ortsaufgelösten Bildinformationen, die von dem ortsauflösenden optischen Sensor herrühren, bezüglich Genauigkeit und Auflösung optimiert werden.

14. Verfahren nach Anspruch 12 oder 13,
**dadurch gekennzeichnet, dass** zum Auswerten der Mikrowellensignale weitere Signalinformationen herangezogen werden, die mit wenigstens einem der nachfolgenden Sensoren gewonnen werden:
- akustischer Sensor, Ultraschallsensor, Mikrofon
- Beschleunigungssensor
- Spektralanalyse-Sensor, Kamera mit optisch wirksamen Vorsatzelement, optisches Gitter oder optisch brechendes Element.

15. Verfahren nach einem der Ansprüche 12 bis 14,
**dadurch gekennzeichnet, dass** zur entfernungsaufgelösten optischen Bilderfassung die Messumgebung mit einer strukturierten Lichtquelle beleuchtet wird.
